# EUROPEAN PATENT APPLICATION

(11) **EP 1 505 847 A1**
(43) Date of publication of application: **09.02.2005**
(21) Application number: 03725801.9
(22) Date of filing: 15.05.2003
(51) Int. Cl.: H04Q 7/38

(54) **MOBILE COMMUNICATION SYSTEM, RADIO BASE STATION APPARATUS, AND RANDOM ACCESS CONTROL METHOD USED IN THEM**

(30) Priority: 15.05.2002 JP 2002139375
(71) Applicant: NEC Corporation, Tokyo 101-8001 (JP)
(72) Inventor: HONDO, Shinya c/o Nec Corporation, Tokyo 108-8001 (JP)
(74) Representative: von Samson-Himmelstjerna, Friedrich R., Dipl.-Phys.
(86) International application number: PCT/JP2003/006107
(87) International publication number: WO 2003/098956

(57) **Abstract**

An AICH control circuit (14) outputs, to an AICH generating circuit(3), RACH resource information from an RACH resource management circuit (13) , SIR information from a finger part(4), error rate information from a decoding part(5), and a call processing control signal. The AICH generating circuit (3) uses AICH information from the RACH resource management circuit (13) and an AICH control signal.

## Description

### BACKGROUND OF THE INVENTION

### FIELD OF THE INVENTION

The present invention relates to a radio base station device and a random access control method used therefor, and particularly, to a random access control method in a radio communication system using spread spectrum communication.

### DESCRIPTION OF THE RELATED ART

In recent years, interference- or disturbance-resistant spread spectrum communication has been remarkable as one of communications which are applied to a mobile communication system. In a radio communication system using spread spectrum communication, for example, a transmission-side device modulates digitalized voice data or image data by means of digital modulation such as PSK (Phase Shift keying), FSK (Frequency Shift keying) modulation or the like, and then converts this modulated transmission data into a wide baseband signal using a spread code such as a PN (Pseudorandom Noise) code or the like, followed by conversion into a radio frequency signal and transmission.

On the other hand, a reception-side device is configured to despread the received radio frequency signal using the same code as the spread code used in the transmission-side device, and then regenerate the received data by means of digital demodulation such as PSK (Phase Shift keying) or FSK (Frequency Shift keying) demodulation.

In a CDMA (Code Division Multiple Access) mobile communication system, a plurality of mobile stations get access to a base station appropriately with arbitrary timing using RACHs (Random Access Channels), while the base station controls its message transmission with respect to that access.

In this conventional random access control method in the CDMA mobile communication system, when the mobile station calls, it transmits to the base station a preamble signal for notification of message generation prior to message transmission. Here, the preamble is generated from 16 kinds of signature codes, and the mobile station generates the preamble by randomly choosing one of the 16 kinds.

When the base station receives the preamble, it compares a prescribed threshold value and a correlation value, and if the correlation value is greater, then the base station determines that the preamble has been detected, and transmits an AICH (Acquisition Indicator Channel) corresponding to that signature to the mobile station. The base station searches all the 16 kinds of signatures, and when none of them has been detected, the AICH is not transmitted. The AICH includes a signature number detected by the base station, an ACK (acknowledgement) for the base station permitting the message transmission of the mobile station and an NACK (negative acknowledgement) for the base station not permitting the message transmission of the mobile station.

When the mobile station receives the AICH corresponding to the signature number transmitted by it within prescribed time, if the AICH is the ACK, then the mobile station transmits a message, or if the AICH is the NACK, then the mobile station skips the sequence of the random access procedure.

When the mobile station receives no AICH corresponding to the signature number transmitted by it within constant time, it ramps (or gradually increases) transmission power, and retransmits the preamble.

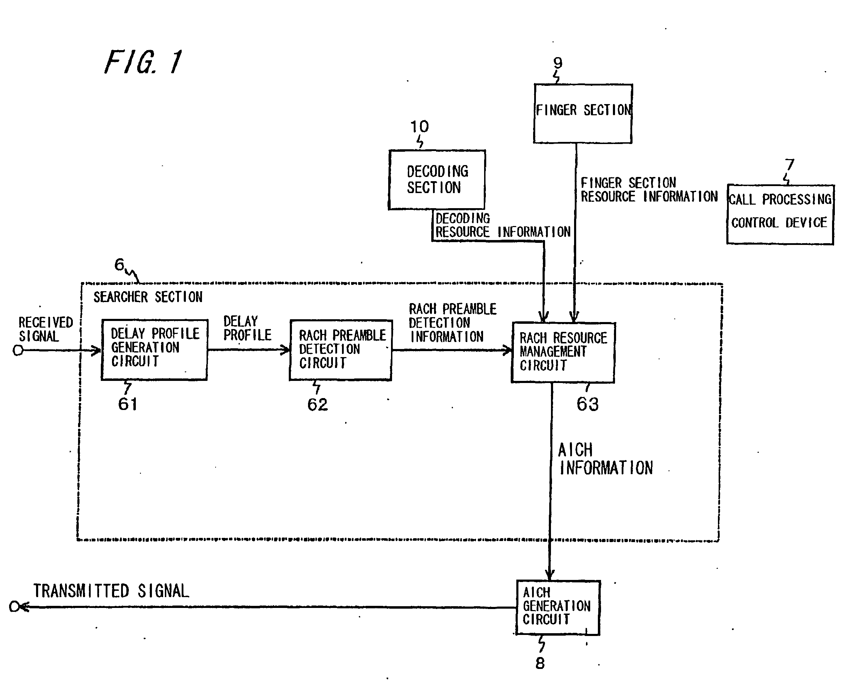

**FIG.1** shows the configuration of a conventional radio base station device. Referring to **FIG.1,** the radio base station device comprises a searcher section **6** comprising a delay profile generation circuit **61**, a RACH preamble detection circuit **62,** and a RACH resource management circuit **63,** an AICH generation circuit **8**, a finger section **9**, a decoding section **10**, and a call processing control device **7**.

The simple signal flow in **FIG.1** is explained. First, a correlation operation of a received signal input to the delay profile generation circuit **61**, with a RACH preamble code for each signature is performed, and a respective delay profile is generated in accordance with that correlation operation result. Here, the delay profile generation circuit **61** is started with constant period at which the RACH preamble arrives.

Each delay profile is output to the RACH preamble detection circuit **62,** and if it has a peak with a level above a prescribed threshold value, it is determined that the RACH preamble for the corresponding signature has been detected, and the RACH preamble detection information for all signatures is output to the RACH resource management circuit **63.** Here, the content of the RACH preamble detection information is signature numbers, its levels, and detection positions. It is assumed that even if none of the signatures is detected, the RACH preamble detection information is output to start the RACH resource management circuit **63.**

Based on resource information of the searcher section **6**, the finger section **9**, and the decoding section **10** required for decoding the RACH preamble detection information and RACH message, the RACH resource management circuit **63** provides an ACK representative of resource utilization permission or an NACK representative of resource utilization non-permission for each signature detected, which is output to the AICH generation circuit **8** as AICH information.

As the resource information of the searcher section **6** can be provided within the RACH resource management circuit **63**, its connection is not particularly shown. Here, when the number of the remaining resources is few compared to the number of the signatures detected, the RACH resource management circuit **63** prioritizes each signature in order of correlation level and from detection position of each detected signature, assigns the resources thereto in descending order of signature priority, and outputs to the AICH generation circuit **8** the RACH resource information currently utilized.

The AICH generation circuit **8** generates an AICH using AICH information, and transmits the AICH as a transmitted signal. Also, the finger section **9** performs demodulation and RAKE combining such as despreading, phasing vector generation, detection, etc., on the received signal, while the decoding section **10** performs error correction, data format conversion, and data transmission to a host device, on the data after the RAKE combining.

In the above conventional random access control method, however, since the more the number of users performing communications, the larger the interference, the effect of the interference due to the RACH preamble becomes large; and because of lack of the resources for the RACH, transmission power of the RACH preamble is ramped and retransmitted until a plurality of radio terminal devices calling within an area receive the corresponding AICHs, thereby making the interference due to the RACH preamble large.

For this reason, in the conventional random access control method, there is the problem that the RACH preamble transmission by the radio terminal devices degrades communication quality. In particular, there tends to be the problem in a congested area in which the number of radio terminal devices performing calls or communications is larger than the number of resources for RACH or traffic channels of the radio base station device.

Also, in the conventional random access control method, there is the problem that, in the above-mentioned congested area, the radio terminal devices ramp the transmission power of the RACH preamble many times, thereby making power consumption of the mobile stations large.

### SUMMARY OF THE INVENTION

Accordingly, it is an object of the present invention to provide a radio base station device and a random access control method used therefor, which obviates the above problems, and can ensure stable communication quality and increase system capacity while controlling wasteful power consumption of a radio terminal device even when the RACH or traffic channel utilization ratio is high.

In a mobile communication system according to the present invention, a mobile station transmits to a base station a RACH (Random Access Channel) preamble for notification of generation of a message prior to transmission of the message when calling, and the base station transmits an AICH (Acquisition Indicator Channel) to the mobile station when detecting the RACH preamble, and wherein the base station controls the transmission of the RACH preamble of the mobile station according to at least a resource utilization ratio and a reception line state.

In a radio base station device according to the present invention, which transmits an AICH (Acquisition Indicator Channel) to a mobile station when detecting a RACH (Random Access Channel) preamble transmitted by the mobile station for notification of generation of a message prior to transmission of the message when the mobile station calls, the radio base station device has a means for controlling the transmission of the RACH preamble of the mobile station according to at least a resource utilization ratio and a reception line state.

Another radio base station device according to the present invention has a delay profile generation circuit for generating a delay profile from a received signal; a RACH preamble detection circuit for detecting, based on the delay profile, a RACH (Random Access Channel) preamble transmitted by a mobile station for notification of generation of a message; an AICH generation circuit for transmitting an AICH (Acquisition Indicator Channel) to the mobile station when detecting the RACH preamble; and an AICH control circuit for outputting to the AICH generation circuit an AICH control signal for controlling the transmission of the RACH preamble of the mobile station based on RACH resource information, SIR (Signal to Interference Ratio) information, error rate information, and traffic channel resource information.

In a random access control method for a radio base station device according to the present invention, which transmits an AICH (Acquisition Indicator Channel) to a mobile station when detecting a RACH (Random Access Channel) preamble transmitted by the mobile station for notification of generation of a message prior to transmission of the message when the mobile station calls, the method has the step of controlling the transmission of the RACH preamble of the mobile station according to at least a resource utilization ratio and a reception line state.

In a random access control method for another radio base station device according to the present invention, which comprises a delay profile generation circuit for generating a delay profile from a received signal; a RACH preamble detection circuit for detecting, based on the delay profile, a RACH (Random Access Channel) preamble transmitted by a mobile station for notification of generation of a message; and an AICH generation circuit for transmitting an AICH (Acquisition Indicator Channel) to the mobile station when detecting the RACH preamble, the method has the step of outputting to the AICH generation circuit an AICH control signal for controlling the transmission of the RACH preamble of the mobile station based on RACH resource information, SIR (Signal to Interference Ratio) information, error rate information, and traffic channel resource information.

In other words, the radio base station device of the present invention controls the transmission of the RACH preamble of the mobile station according to a resource utilization ratio and a reception line state of the base station, thereby realizing enhanced communication quality, increased system capacity, depressed interference with a peripheral base station and a mobile station, and reduced power consumption of the mobile station.

More specifically, in the radio base station device of the present invention, the delay profile generation circuit generates a delay profile from a received signal, and the RACH preamble detection circuit detects a RACH preamble based on the delay profile. The AICH control circuit outputs an AICH control signal to the AICH generation circuit based on RACH resource information from the RACH resource management circuit, SIR (Signal to Interference Ratio) information from the finger section, error rate information from the decoding section, and traffic channel resource information from the call processing control device.

Although the AICH generation circuit generates an AICH based on AICH information from the RACH resource management circuit, it continues transmitting NACKs (negative acknowledgements) for all signatures, regardless of the content of the AICH information, while the AICH control signal is being output from the AICH control circuit. This allows controlling the transmission of the RACH preamble of the mobile station present in a congested area.

In the radio base station device of the present invention, while the NACKs are being transmitted from the radio base station device for all signatures as described above, no radio terminal devices which transmit RACH preambles to the radio base station device perform ramping (the transmission method by gradually increasing a power value) . In other words, the radio base station device skips the random access procedure without waiting for receiving an AICH.

Also, even if the radio base station device reenters the random access procedure, a transmitted RACH preamble is the lowest power. This allows another user who has already communicated with the radio base station with a RACH message and a traffic channel to see noises reduced and communication quality enhanced.

Further, a noise reduction effect is also provided for an area of another radio base station device overlapping with an area of the above radio base station device. In particular, for a user who performs packet communications using a traffic channel, since a packet retransmission rate is low, the possibility of communication time per 1 user being short is high, and a vacancy is made sooner in resources of the radio base station device. In other words, more RACHs and traffic channels can be treated.

In the radio base station device of the present invention, this can ensure stable communication quality and increase system capacity even when the RACH or traffic channel utilization ratio is high.

In the radio base station device of the present invention, on the other hand, even if the resources for the RACH are left, no communications can be performed due to lack of the resources for the traffic channel, and in spite of the wasteful case of communications with the first RACH, or no resources for the RACH, because no RACH preamble power reaches a threshold value of the radio base station device, the radio base station device transmits no AICH, thereby allowing preventing beforehand the case where the radio terminal device which cannot receive an AICH continues ramping transmission of RACH preambles. Thus, in the radio base station device of the present invention, wasteful power consumption of the radio terminal device can be controlled when the RACH or traffic channel utilization ratio is high.

Also, in the radio base station device of the present invention, if the resources for AICH transmission have already existed in the radio base station, and if no AICH is received or no corresponding signature is detected in the radio terminal device, ramping transmission is stopped, and if the corresponding signature is the NACK, the random access procedure is skipped and the transmission of RACH preambles is stopped. For this reason, in the radio base station device of the present invention, in order to obtain the above effects, no resources for the radio base station device are newly consumed, and no alteration of the radio terminal device is required.

Further, in the radio base station device of the present invention, the AICH must originally be transmitted within prescribed short time from when the RACH preamble is transmitted, and using an existing mechanism of this radio base station device enables sooner transmission to all radio terminal devices than other channels being periodically transmitted, for example. Therefore, in the radio base station device of the present invention, quick control is possible for the radio terminal devices.

As mentioned above, in a mobile communication system according to the present invention, a mobile station transmits to a base station a RACH (Random Access Channel) preamble for notification of generation of a message prior to transmission of the message when calling, and the base station transmits an AICH to the mobile station when detecting the RACH preamble, and wherein the transmission of the RACH preamble of the mobile station is controlled according to at least a resource utilization ratio and a reception line state, thereby enabling ensuring stable communication quality and increasing system capacity while controlling wasteful power consumption of the radio terminal device even when the RACH or traffic channel utilization ratio is high.

### BRIEF DESCRIPTION OF THE DRAWINGS

The preferred embodiments according to the invention will be explained below referring to the drawings, wherein:
**FIG.1** is a block diagram showing the configuration of a conventional radio base station device;
**FIG.2** is a block diagram showing the configuration of a radio base station device according to one embodiment of the present invention;
**FIG.3** is a block diagram showing the configuration of a general radio terminal device used in one embodiment of the present invention;
**FIG.4** is a flowchart showing the operation of the RACH resource management circuit of **FIG.2;**
**FIG.5** is a flowchart showing the operation of the AICH control circuit of **FIG.2;** and
**FIG.6** is a flowchart showing the operation of the AICH control circuit according to another embodiment of the present invention.

### DETAILED DESCRIPTION OF THE PREFERRED EMBODIMENTS

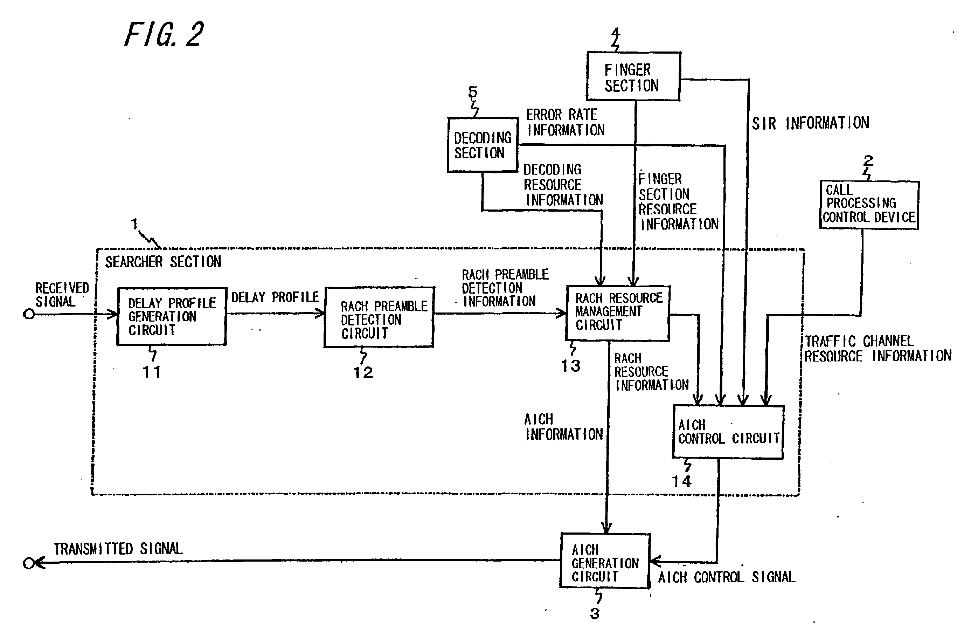

**FIG.2** is a block diagram showing the configuration of a radio base station device according to one embodiment of the present invention. In **FIG.2**, the radio base station device according to one embodiment of the present invention comprises a searcher section **1,** a call processing control device **2**, an AICH (Acquisition Indicator Channel) generation circuit **3**, a finger section **4**, and a decoding section **5**.

The searcher section **1** comprises a delay profile generation circuit **11**, a RACH (Random Access Channel) preamble detection circuit **12**, and a RACH resource management circuit **13**, and an AICH control circuit **14.**

The simple signal flow in **FIG.2** is explained. First, a correlation operation of a received signal input to the delay profile generation circuit **11**, with a RACH preamble code for each signature is performed, and a respective delay profile is generated in accordance with that correlation operation result. Here, the delay profile generation circuit **11** is started with constant period at which the RACH preamble arrives.

Each delay profile is output to the RACH preamble detection circuit **12**, and if it has a peak with a level above a prescribed threshold value, it is determined that the RACH preamble for the corresponding signature has been detected, and the RACH preamble detection information for all signatures is output to the RACH resource management circuit **13**. Here, the content of the RACH preamble detection information is signature numbers, its levels, and detection positions. It is assumed that even if none of the signatures is detected, the RACH preamble detection information is output to start the RACH resource management circuit **13**.

Based on resource information of the searcher section **1**, the finger section **4**, and the decoding section **5** required for decoding the RACH preamble detection information and RACH message, the RACH resource management circuit **13** provides an ACK representative of resource utilization permission or an NACK representative of resource utilization non-permission for each signature detected, which is output to the AICH generation circuit **13** as AICH information.

As the resource information of the searcher section **1** can be provided within the RACH resource management circuit **13**, its connection is not particularly shown. Here, when the number of the remaining resources are few compared to the number of the signatures detected, the RACH resource management circuit **13** prioritizes each signature in order of correlation level and from detection position of each detected signature, assigns the resources thereto in descending order of signature priority, and outputs to the AICH control circuit **14** the RACH resource information currently utilized.

Here, the AICH control circuit **14** outputs an AICH control signal to the AICH generation circuit **3** based on RACH resource information from the RACH resource management circuit **13**, SIR (Signal to Interference Ratio) information from the finger section **4**, error rate information from the decoding section **5**, and traffic channel resource information from the call processing control device **2**.

The AICH generation circuit **3** generates an AICH using AICH information, and transmits the AICH as a transmitted signal. Also, the finger section **4** performs demodulation and RAKE combining such as despreading, phasing vector generation, detection, etc., on the received signal, while the decoding section **5** performs error correction, data format conversion, and data transmission to a host device, on the data after the RAKE combining.

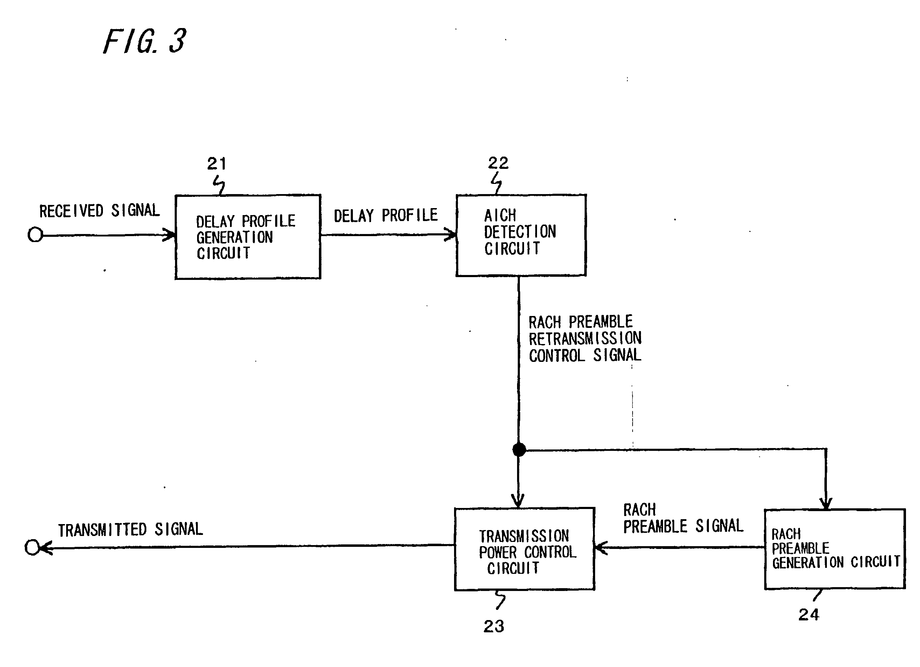

**FIG.3** is a block diagram showing the configuration of a general radio terminal device used in one embodiment of the present invention. In **FIG.3**, the radio terminal device comprises a delay profile generation circuit **21**, an AICH detection circuit **22**, a RACH preamble transmission power control circuit **23**, and a RACH preamble generation circuit **24**.

The simple signal flow in **FIG.3** is explained. First, a correlation operation of a received signal input to the delay profile generation circuit **21**, with the same spread code as a spread code used in the radio base station device is performed, and a respective delay profile is generated in accordance with that correlation operation result. The delay profile is output to the AICH detection circuit **22**, which determines whether RACH preambles transmitted by it have been detected in the radio base station device, and whether resources are assigned thereto.

When the AICH detection circuit **22** receives no AICH of the corresponding signature within prescribed time, it outputs a RACH preamble retransmission control signal to the RACH preamble transmission power control circuit **23**, and the RACH preamble generation circuit **24**.

When the RACH preamble generation circuit **24** receives the RACH preamble retransmission control signal, it outputs a RACH preamble signal to the RACH preamble transmission power control circuit **23,** which makes a power value higher than a previous power value, and transmits a RACH preamble signal.

Also, if the radio terminal device receives an AICH of the corresponding signature, and the AICH is the "NACK", it skips the random access procedure to stop the transmission of the RACH preamble.

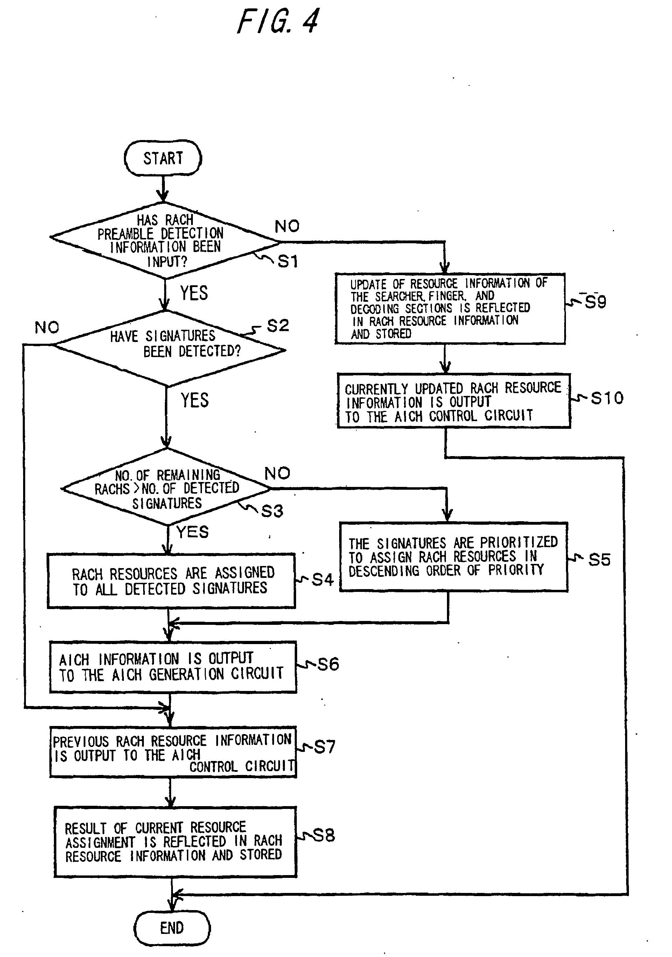

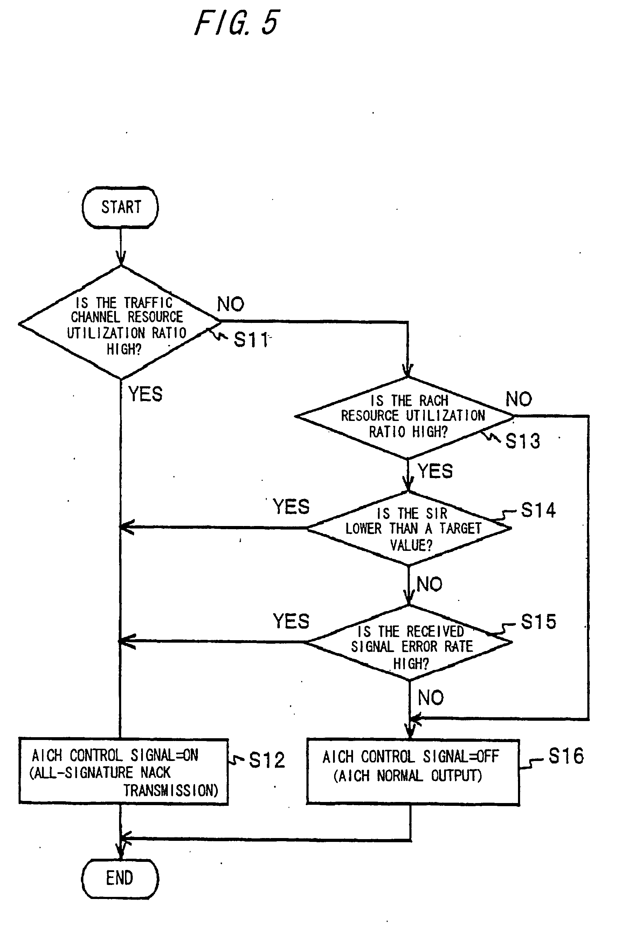

**FIG.4** is a flowchart showing the operation of the RACH resource management circuit **13** of **FIG.2. FIG.5** is a flowchart showing the operation of the AICH control circuit **14** of **FIG.2.** Referring to these **FIGs. 2-5,** the operation of the RACH resource management circuit **13** and the AICH control circuit **14** is explained.

When the RACH resource management circuit **13** receives RACH preamble detection information or any resource information of the searcher section **1**, the finger section **4**, and the decoding section **5** (update of resource acquisition/release state), its operation starts.

When the RACH resource management circuit **13** receives a RACH preamble detection information **(FIG.4,** step **S1),** and detected signatures exist **(FIG.4,** step **S2**), the RACH resource management circuit **13** compares the number of assignable RACH resources and the number of detected signatures, and if the number of RACH resources is equal to or greater than the number of detected signatures, the RACH resources are assigned to all the detected signatures **(FIG.4,** steps **S3, S4**).

Also, if the number of RACH resources is fewer, the RACH resource management circuit 13 prioritizes the detected signatures to assign the RACH resources thereto in descending order of signature priority **(FIG.4,** steps **S3, S5**). Subsequently, the RACH resource management circuit **13** outputs AICH information (each signature detection/non-detection and ACK/NACK) to the AICH control circuit **3** (**FIG. 4**, step **S6**) , outputs stored previous RACH resource information to the AICH control circuit **14 (FIG.4,** step **S7**), and stores RACH resource information updated by the current RACH resource assignment (**FIG.4**, step **S8).**

When no signatures are detected **(FIG.4,** step **S2)** , the RACH resource management circuit **13** outputs stored previous RACH resource information to the AICH control circuit **14** (**FIG.4**, step **S7**) , and stores RACH resource information updated by the current RACH resource assignment **(FIG.4,** step **S8**).

Also, when the RACH resource management circuit **13** receives any resource information of the searcher section **1,** the finger section **4,** and the decoding section **5 (FIG.4,** step **S1),** it causes the content thereof to be reflected in the RACH resource information and stores it **(FIG.4,** step **S9),** and outputs it to the AICH control circuit **14** (**FIG.4**, step **S10).**

Also, when RACH preamble information is input, the RACH resource management circuit 13 stores the current RACH resource information **(FIG.4,** step **S8**), and outputs the stored previous RACH resource information **(FIG.4,** step **S7**) . This allows the AICH to be outputted correctly from the AICH generation circuit **3** (without providing all signatures with NACKs) even when the RACH resource utilization ratio goes above a set value.

When the AICH control circuit **14** also receives any of RACH resource information from the RACH resource management circuit **13**, SIR information from the finger section **4**, error rate information from the decoding section **5,** and traffic channel resource information from the call processing control device **2**, its operation starts.

If the resource utilization ratio for the traffic channel of the radio base station device that is the traffic channel resource information from the call processing control device **2** is high (**FIG. 5,** step **S11)** , the AICH control circuit **14** turns on an AICH control signal which is outputted to the AICH generation circuit **3 (FIG.5,** step **S12).**

When the resource utilization ratio for the traffic channel of the radio base station device is low **(FIG. 5,** step **S11**) *,* but if the resource utilization ratio for the RACH that is the RACH resource information from the RACH resource management circuit **13** is high (**FIG.5**, step **S13**), and if the SIR that is the SIR information from the finger section **4** is lower than a target value (**FIG.5,** step **S14),** or if the error rate of the received signal that is the error rate information from the decoding section **5** is high (**FIG.5,** step **S15**), the AICH control circuit **14** turns on an AICH control signal which is outputted to the AICH generation circuit **3 (FIG.5,** step **S12).**

On the other hand, when the resources for the RACH are sufficient (**FIG.5,** step **S13**), or if the resources for the RACH are insufficient, but the SIR is above the target value, and the error rate is low (**FIG.5**, steps **S14, S15)** , the AICH control signal is turned off (**FIG.5,** step **S16**).

When the AICH control signal is on, regardless of the content of the AICH information from the RACH resource management circuit **13**, the AICH generation circuit **3** transmits NACKs for all signatures, while an AICH signal is output according to the AICH information when the AICH control signal is off.

In this manner, in this embodiment, while the NACKs are being transmitted from the radio base station device for all signatures, no radio terminal devices which transmit RACH preambles to the radio base station device perform ramping (the transmission method by gradually increasing a power value). In other words, the radio base station device skips the random access procedure without waiting for receiving an AICH.

Also, in this embodiment, even if the radio base station device reenters the random access procedure, a transmitted RACH preamble is the lowest power. This allows another user who has already communicated with the radio base station with a RACH message and a traffic channel to see noises reduced and communication quality enhanced.

Further, in this embodiment, a noise reduction effect is also provided for an area of another radio base station device overlapping with an area of the above radio base station device. In particular, for a user who performs packet communications using a traffic channel, since a packet retransmission rate is low, the possibility of communication time per 1 user being short is high, and a vacancy is made sooner in resources of the radio base station device. In other words, more RACHs and traffic channels can be treated.

In this embodiment, this can ensure stable communication quality and increase system capacity even when the RACH or traffic channel utilization ratio is high.

In this embodiment, on the other hand, even if the resources for the RACH are left, no communications can be performed due to lack of the resources for the traffic channel, and in spite of the wasteful case of communications with the first RACH, or no resources for the RACH, because no RACH preamble power reaches a threshold value of the radio base station device, the radio base station device transmits no AICH, thereby allowing preventing beforehand the case where the radio terminal device which cannot receive an AICH continues ramping transmission of RACH preambles. In this embodiment, this allows wasteful power consumption of the radio terminal device to be controlled when the RACH or traffic channel utilization ratio is high.

Also, in this embodiment, if the resources for AICH transmission have already existed in the radio base station, and if no AICH is received or no corresponding signature is detected in the radio terminal device, ramping transmission is stopped, and if the corresponding signature is the NACK, the random access procedure is skipped and the transmission of RACH preambles is stopped. Therefore, in order to obtain the above effects, no resources for the radio base station device are newly consumed, and no alteration of the radio terminal device is required.

Further, in this embodiment, the AICH must originally be transmitted within prescribed short time from when the RACH preamble is transmitted, and using an existing mechanism of this radio base station device enables sooner transmission to all radio terminal devices than other channels being periodically transmitted, for example. Therefore, in this embodiment, quick control is possible for the radio terminal devices.

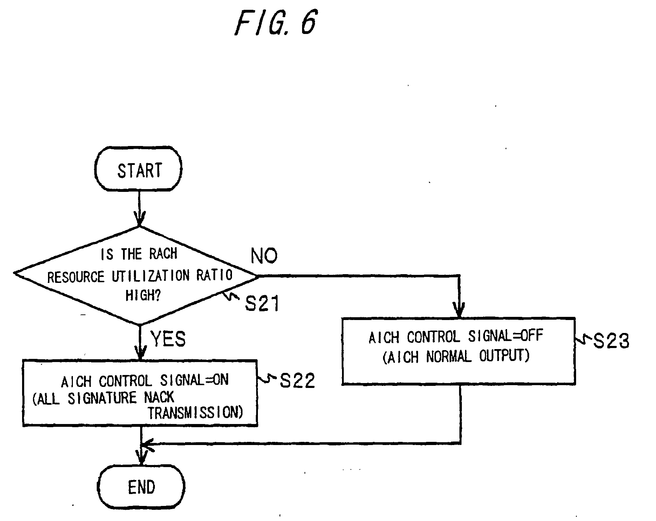

**FIG.6** is a flowchart showing the operation of the AICH control circuit according to another embodiment of the present invention. Another embodiment of the present invention is configured in the similar manner to one embodiment of the present invention shown in **FIG.2,** except that the operation of the AICH control circuit **14** is different. Thus, referring to **FIGs.2** and **6,** the operation of the AICH control circuit **14** according to another embodiment of the present invention is explained.

There is no limitation in the combination of turn-on/off of the AICH control signal using the above-mentioned RACH resource information, SIR information, error rate information, and traffic channel resource information. Also, the resource utilization ratios for the traffic channel and for the RACH can be set arbitrarily. The operation in this case is explained referring to **FIG.6**.

If the resource utilization ratio for the RACH that is the RACH resource information from the RACH resource management circuit **13** is high **(FIG.6,** step **S21),** the AICH control circuit **14** turns on an AICH control signal which is outputted to the AICH generation circuit 3 (FIG.6, step S22).

On the other hand, when the resources for the RACH are sufficient (**FIG.6**, step **S21**) , the AICH control signal is turned off (**FIG.6**, step **S23**). In this manner, only when the communication with the RACH rather than the traffic channel (e.g., where packet communications with less transmission amount as well as calling are treated with the RACH) is prioritized, and no resources for the RACH are left (the resource utilization ratio is 100%) , the AICH control signal is considered to be turned on.

Although the radio base station device of the present invention uses -the AICH as notification means for stopping the transmission of the RACH preamble of the radio terminal device, there is no limitation in the kind of its alternative channel where it can notify all radio terminal devices together.

Although the invention has been described with respect to the specific embodiments for complete and clear disclosure, the appended claims are not to be thus limited but are to be construed as embodying all modifications and alternative constructions that may occur to one skilled in the art which fairly fall within the basic teaching herein set forth.

## Claims

1. In a mobile communication system, a mobile station transmitting to a base station a RACH (Random Access Channel) preamble for notification of generation of a message prior to transmission of said message when calling, and said base station transmitting an AICH (Acquisition Indicator Channel) to said mobile station when detecting said RACH preamble, wherein:
said base station controls the transmission of said RACH preamble of said mobile station according to at least a resource utilization ratio and a reception line state.

2. The mobile communication system according to claim **1,** wherein:
said base station controls the transmission of the RACH preamble of said mobile station, by transmitting to said mobile station information which does not permit the transmission of said message of said mobile station, according to said resource utilization ratio and said reception line state.

3. The mobile communication system according to claim **2**, wherein:
said base station transmits to said mobile station information which does not permit the transmission of said message of said mobile station, using said AICH.

4. A radio base station device, which transmits an AICH (Acquisition Indicator Channel) to a mobile station when detecting a RACH (Random Access Channel) preamble transmitted by said mobile station for notification of generation of a message prior to transmission of said message when said mobile station calls, the radio base station device comprising:
means for controlling the transmission of said RACH preamble of said mobile station according to at least a resource utilization ratio and a reception line state.

5. The radio base station device according to claim **4,** wherein:
said means for controlling the transmission of said RACH preamble transmits to said mobile station information which does not permit the transmission of said message of said mobile station, according to said resource utilization ratio and said reception line state.

6. The radio base station device according to claim **5**, wherein:
said means for controlling the transmission of said RACH preamble transmits to said mobile station information which does not permit the transmission of said message of said mobile station, using said AICH.

7. A radio base station device comprising:
a delay profile generation circuit for generating a delay profile from a received signal;
a RACH preamble detection circuit for detecting, based on said delay profile, a RACH (Random Access Channel) preamble transmitted by a mobile station for notification of generation of a message;
an AICH generation circuit for transmitting an AICH (Acquisition Indicator Channel) to said mobile station when detecting said RACH preamble; and
an AICH control circuit for outputting to said AICH generation circuit an AICH control signal for controlling the transmission of said RACH preamble of said mobile station based on RACH resource information, SIR (Signal to Interference Ratio) information, error rate information, and traffic channel resource information.

8. The radio base station device according to claim **7**, wherein:
said AICH generation circuit continues transmitting to said mobile station a signal for controlling the transmission of said RACH preamble of said mobile station, regardless of the content of AICH information based on said RACH resource information, while said AICH control signal is being output.

9. The radio base station device according to claim **8**, wherein:
said AICH generation circuit continues transmitting to said mobile station information which does not permit the transmission of said message of said mobile station, using said AICH.

10. A random access control method for a radio base station device, which transmits an AICH (Acquisition Indicator Channel) to a mobile station when detecting a RACH (Random Access Channel) preamble transmitted by said mobile station for notification of generation of a message prior to transmission of said message when said mobile station calls, the method comprising:
controlling the transmission of said RACH preamble of said mobile station according to at least a resource utilization ratio and a reception line state.

11. The random access control method for a radio base station device according to claim **10**, wherein:
said controlling the transmission of said RACH preamble comprises transmitting to said mobile station information which does not permit the transmission of said message of said mobile station, according to said resource utilization ratio and said reception line state.

12. The random access control method for a radio base station device according to claim **11**, wherein:
said controlling the transmission of said RACH preamble comprises transmitting to said mobile station information which does not permit the transmission of said message of said mobile station, using said AICH.

13. A random access control method for a radio base station device, which comprises a delay profile generation circuit for generating a delay profile from a received signal; a RACH preamble detection circuit for detecting, based on said delay profile, a RACH (Random Access Channel) preamble transmitted by a mobile station for notification of generation of a message; and an AICH generation circuit for transmitting an AICH (Acquisition Indicator Channel) to said mobile station when detecting said RACH preamble, the method comprising:
outputting to said AICH generation circuit an AICH control signal for controlling the transmission of said RACH preamble of said mobile station based on RACH resource information, SIR (Signal to Interference Ratio) information, error rate information, and traffic channel resource information.

14. The random access control method for a radio base station device according to claim **13**, wherein:
said outputting an AICH control signal comprises continuing transmitting to said mobile station a signal for controlling the transmission of said RACH preamble of said mobile station, regardless of the content of AICH information based on said RACH resource information, while said AICH control signal is being output.

15. The random access control method for a radio base station device according to claim **14**, wherein:
said outputting an AICH control signal comprises continuing transmitting from said AICH generation circuit to said mobile station information which does not permit the transmission of said message of said mobile station, using said AICH.

16. In a mobile communication system, a mobile station transmitting to a base station a RACH (Random Access Channel) preamble for notification of generation of a message prior to transmission of said message when calling, and said base station transmitting an AICH (Acquisition Indicator Channel) to said mobile station when detecting said RACH preamble, wherein:
said base station transmits information, which does not permit message transmission of all mobile stations belonging to an area of said base station, to said all mobile stations, according to at least a resource utilization ratio and a reception line state.

17. A radio base station device, which transmits an AICH (Acquisition Indicator Channel) to a mobile station when detecting a RACH (Random Access Channel) preamble transmitted by said mobile station for notification of generation of a message prior to transmission of said message when said mobile station calls, the radio base station device comprising:
means for transmitting information, which does not permit message transmission of all mobile stations belonging to an area of said base station, to said all mobile stations, according to at least a resource utilization ratio and a reception line state.

18. A random access control method for a radio base station device, which transmits an AICH (Acquisition Indicator Channel) to a mobile station when detecting a RACH (Random Access Channel) preamble transmitted by said mobile station for notification of generation of a message prior to transmission of said message when said mobile station calls, the method comprising:
transmitting information, which does not permit message transmission of all mobile stations belonging to an area of said base station, to said all mobile stations, according to at least a resource utilization ratio and a reception line state.
